# EUROPÄISCHE PATENTSCHRIFT

(11) **EP 4 308 651 B1**
(45) Veröffentlichungstag und Bekanntmachung des Hinweises auf die Patenterteilung: **01.01.2025**
(21) Anmeldenummer: 22713951.6
(22) Anmeldetag: 14.03.2022
(51) Int. Cl.: C08L 97/00, C07G 1/00

(54) **VERFAHREN ZUR FRAKTIONIERENDEN AUFTRENNUNG VON LIGNIN**
METHODS FOR THE FRACTIONATION OF LIGNIN
MÉTHODES DE FRACTIONNEMENT DE LA LIGNINE

(30) Priorität: 18.03.2021 DE 102021106727
(43) Veröffentlichungstag der Anmeldung: 24.01.2024
(73) Patentinhaber: Forschungszentrum Jülich GmbH, 52428 Jülich (DE)
(72) Erfinder: GRANDE, Philipp M., 52064 Aachen (DE); KLOSE, Holger, 52076 Aachen (DE); LEITNER, Walter, 52074 Aachen (DE); WEIDENER, Dennis, 52070 Aachen (DE); DOMÍNGUEZ DE MARÍA, Pablo, 35006 Las Palmas de Gran Canaria (ES)
(74) Vertreter: Michalski Hüttermann & Partner Patentanwälte mbB
(86) Internationale Anmeldenummer: PCT/EP2022/056562
(87) Internationale Veröffentlichungsnummer: WO 2022/194788

(56) Entgegenhaltungen:
- SMINK DION ET AL: "Comparing multistage liquid-liquid extraction with cold water precipitation for improvement of lignin recovery from deep eutectic solvents", SEPARATION AND PURIFICATION TECHNOLOGY, vol. 252, 1 December 2020 (2020-12-01), NL, pages 117395, XP055934038, ISSN: 1383-5866, DOI: 10.1016/j.seppur.2020.117395
- MYINT AYE AYE ET AL: "One pot synthesis of environmentally friendly lignin nanoparticles with compressed liquid carbon dioxide as an antisolvent", GREEN CHEMISTRY, vol. 18, no. 7, 1 January 2016 (2016-01-01), GB, pages 2129 - 2146, XP055806638, ISSN: 1463-9262, Retrieved from the Internet <URL:https://pubs.rsc.org/en/content/articlepdf/2016/gc/c5gc02398j> DOI: 10.1039/C5GC02398J
- WEIDENER DENNIS ET AL: "Selective lignin fractionation using CO 2 -expanded 2-methyltetrahydrofuran (2-MTHF)", GREEN CHEMISTRY, vol. 23, no. 17, 31 August 2021 (2021-08-31), GB, pages 6330 - 6336, XP055934016, ISSN: 1463-9262, Retrieved from the Internet <URL:https://pubs.rsc.org/en/content/articlepdf/2021/gc/d1gc01651b> DOI: 10.1039/D1GC01651B

## Beschreibung

Die vorliegenden Erfindung betrifft ein Verfahren zur fraktionierenden Ausfällung von Lignin aus einer nicht-wässrigen Lösung, wobei in einem ersten Verfahrensschritt a) das Lignin in einem Lösungsmittel ausgesucht aus der Gruppe bestehend aus substituierten oder nicht substituierten aliphatischen, zyklischen Ethern oder Lactonen oder einer Mischung dieser Lösungsmittel gelöst wird und in einem zweiten Verfahrensschritt b) das Lignin durch Aufpressen unterschiedlicher Kohlendioxiddrücke zumindest als Funktion des Molekulargewichts und/oder als Funktion der Lignin-Zusammensetzung selektiv aus der Lösung ausgefällt werden.

Das industrielle Potential biologischer Materialien wird schon seit vielen Jahren in den unterschiedlichsten Anwendungsbereichen genutzt. Aus dem täglichen Leben bekannt sind beispielsweise die Herstellung von Möbeln oder Kleidung unter ausschließlicher Verwendung von Naturprodukten. Eine weitere Dimension ist in den letzten Jahrzehnten im industriellen Bereich dadurch hinzugekommen, dass neben der reinen Nutzung der vorliegenden Materialien auch stärkerer Fokus auf eine ressourcenschonende, spezifische Ver- und Aufarbeitung gelegt wird, wobei durch diese Kombination für die Grundmaterialien gezielt neue Eigenschaften und Anwendungsbereiche erschlossen werden sollen. Zum Großteil handelt es sich bei den wirtschaftlich wichtigen biologischen Materialien meist um polymere Substanzgemische, deren einzelne Fraktionen jeweils einen eigenen Teil zu den makroskopischen Eigenschaften des Gesamtmaterials beitragen. Besonders deutlich wird dieses Grundprinzip im Bereich der Holznutzung. Holz stellt ein Gemisch unterschiedlicher Biopolymere dar, wobei die einzelnen Fraktionen, beispielsweise Lignin und Zellulose, jeweils einen deutlich unterschiedlichen Aufbau zeigen und für jeweils spezifische Eigenschaften des makroskopischen Systems Holz verantwortlich sind. Dieses übergreifende Aufbauprinzip setzt sich auch für das einzelne Biopolymer fort. So spielt beispielsweise Lignin mit einem Anteil von 20-40% eine zentrale Rolle in der biologischen Aufarbeitung von Lignozellulose, wobei diese Fraktion insbesondere als innovatives Biomaterial oder zur ressourcenschonenden, nicht Erdöl basierten Synthese von Chemikalien mit aromatischen Bestandteilen genutzt werden kann. Das Verständnis der chemischen und physikalischen Eigenschaften unterschiedlicher Lignin-Fraktionen steht erst noch am Anfang, dennoch ist sicher, dass nur mit der maßgeschneiderten industriellen Nutzung der spezifischen Vorteile einzelner Lignin-Fraktionen in von der Ökobilanz getriebenen Verarbeitungsschritten auch eine verbesserte wirtschaftliche Bilanz erhalten werden kann.

In der Patentliteratur finden sich die unterschiedlichsten Vorschläge zur Aufarbeitung von Biopolymeren, insbesondere von Lignin.

So beschreibt beispielsweise die EP 3 030 599 B1 ein Verfahren zum Isolieren von Lignin, vorzugsweise unmodifiziertem Lignin, aus einer Mischung, insbesondere einer Aufschlämmung in der Zellstoffherstellung, enthaltend Lignin, ein Lösemittel für Zellulose, ein Fällungsmittel für Zellulose, Mineralien und optional (noch vorhandene) Zellulose und/oder Hemizellulose und/oder Hydrolysierungsprodukte davon, umfassend oder bestehend aus den folgenden Schritten: i) Entfernen des Fällungsmittels für Zellulose aus der Mischung, ii) in Kontakt bringen der Mischung mit einem Fällungsmittel für Lignin, vorzugsweise bei einer Temperatur von unter 50 °C, um ein Präzipitat zu erhalten, iii) Entfernen des Präzipitats, das in Schritt ii) erhalten wurde, aus der Mischung, iv) optional Waschen des Präzipitats mit einem Fällungsmittel für Lignin, v) Entfernen des Fällungsmittels für Lignin aus dem Präzipitat, vi) optional Trennen des Lösemittels für Zellulose und des Fällungsmittels für Lignin von der verbleibenden Mischung, die in Schritt iii) erhalten wurde mit der Maßgabe, dass Schritt i) nur optional ist, wenn das Fällungsmittel für Zellulose das gleiche ist wie das Fällungsmittel für Lignin, das in Schritt ii) verwendet wird, oder ein oder mehrere Bestandteile der Mischung, die als Fällungsmittel für Lignin in Schritt ii) verwendet wird, beinhaltet.

In einem weiteren Patentdokument, der US 8 172 981 B2 wird ein Verfahren zur Trennung von Lignin aus einer Schwarzlauge offenbart, welches die folgenden Schritte umfasst: a) Ausfällen von Lignin durch Ansäuern von Schwarzlauge, was zu einer ersten Ligninsuspension führt und daraufhin eine Trennung durchführt, wodurch ein erster Kuchen aus festem Material gebildet wird, der ein erster Ligninfilterkuchen ist,
b) Suspendieren des in Schritt a) erhaltenen Ligninfilterkuchens und während des Suspensionsvorgangs Einstellen des pH-Werts der Suspension auf ungefähr den pH-Wert des Waschwassers von Schritt c) unten, woraufhin eine zweite Ligninsuspension erhalten wird,
c) Trennen der zweiten Ligninsuspension, wodurch ein zweiter Kuchen aus festem Material, also ein zweiter Filterkuchen, gebildet wird, und anschließendes Hinzufügen von angesäuertem Waschwasser zum Verdrängungswaschen, gefolgt von einer Verbesserung der Trockenheit des Ligninfilterkuchens, woraufhin ein Säurefiltrat erhalten wird, und
d) Fördern des Filtrats aus Schritt c) oder ausgewählter Teile des Filtrats aus Schritt c) zur Verdünnung vor der Trennung in Schritt a) und / oder Zugabe als Waschwasser zu dem in Schritt a) hergestellten Filterkuchen, wobei die Ionenstärke eingestellt wird vor der Zugabe durch Zugabe von Salz, ESP-Staub, Kesselabscheiderstaub der Zellstoffmühle oder Natriumsulfat, um ein Na/S-Gleichgewicht in einer Zellstoffmühle zu kontrollieren, und der pH-Wert wird durch Zugabe von ESP-Staub oder Kesselabscheiderstaub der Zellstoffmühle eingestellt und die zusätzliche Verwendung des Filtrats in Schritt d) erfolgt im Suspensionsschritt von Schritt b) oder vor dem Filtrationsschritt von Schritt c).

Weiterhin offenbart die WO 0 238 857 A1 ein Verfahren zum Reduzieren des Gehalts an Holzextrakten oder zum wesentlichen Entfernen von Holzextrakten, umfassend das Inkon-Holzextrakte zu extrahieren und den Extrakt aus den Fasern zu entfernen, um verbesserte Zellulosefasern mit einem reduzierten Gehalt an Extrakten zu erhalten.

Weitere Informationen zur Aufarbeitung von Lignin finden sich beispielsweise in Smink Dion et al: "Comparing multistage liquid-liquid extraction with cold water precipitation for improvement of lignin recovery from deep eutectic solvents", SEPARATION AND PURIFI-CATION TECHNOLOGY, Bd. 252, 1. Dezember 2020 (2020-12-01), Seite 117395, XP55934038 und Myint Aye Aye et al: "One pot synthesis of environmentally friendly lignin nanoparticles with compressed liquid carbon dioxide as an antisolvent", GREEN CHEMIS-TRY, Bd. 18, Nr. 7, 1. Januar 2016 (2016-01-01), Seiten 2129-2146, XP055806638. Derartige aus dem Stand der Technik bekannte Lösungen können noch weiteres Verbesserungspotential bieten, insbesondere hinsichtlich der Spezifizität des Trennungsprozesses sowie der Flexibilität in den zu trennenden Ligninen.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung ein Verfahren zu offenbaren, mit welchem Lignine sehr präzise nach deren Molekulargewichten und/oder ihrer Struktur getrennt werden können. Zudem ist es die Aufgabe der vorliegenden Erfindung die Verwendung dieses Verfahrens zur Auftrennung von Lignin zu offenbaren.

Die Lösung der Aufgabe erfolgt durch die Merkmale der jeweiligen unabhängigen Ansprüche, gerichtet auf das erfindungsgemäße Verfahren, sowie die erfindungsgemäße Verwendung des Verfahrens.

Erfindungsgemäß ist dementsprechend ein Verfahren zur fraktionierenden Ausfällung von Lignin aus einer nicht-wässrigen Lösung, wobei in einem ersten Verfahrensschritt
a) das Lignin in einem Lösungsmittel ausgesucht aus der Gruppe bestehend aus substituierten oder nicht substituierten aliphatischen, zyklischen Ethern oder Lactonen oder einer Mischung dieser Lösungsmittel gelöst wird und in einem zweiten Verfahrensschritt
b) das Lignin durch Aufpressen unterschiedlicher Kohlendioxiddrücke zumindest als Funktion des Molekulargewichts und/oder als Funktion der Lignin-Zusammensetzung selektiv aus der Lösung ausgefällt wird.

Überraschenderweise wurde festgestellt, dass sich über oben angegebenes Verfahren eine Vielzahl von Ligninen aus unterschiedlichen biologischen Quellen mit der angegebenen Gruppe an Lösungsmitteln sehr einfach und hochspezifisch voneinander trennen lassen. Insofern können über den angegebenen Trennungsweg sehr genau definierte Lignin-Klassen erhalten werden, welches für die industrielle Verwertbarkeit der Lignine von äußerster Wichtigkeit ist. Basierend auf der Heterogenität des biologischen, polymeren Materials können durch den Erhalt definierter Fraktionen nun erstmals auch industrielle Anwendungen angedacht werden, welche mit unspezifischen Lignin-Substanzgemischen aufgrund der chemisch und physikalisch heterogenen Eigenschaften, so nicht einfach umsetzbar sind. Insofern kann erstmals eine engere Einteilung der Lignin-Substanzklassen bereitgestellt werden, welche neben den spezifischen Eigenschaften zudem auch den Vorteil aufweisen, dass das Material aus natürlichen, nachwachsenden Quellen gewonnen werden kann. Des Weiteren kann das Verfahren zudem auch ökologisch unbedenklicher ausgestaltet werden, indem Lösemittel aus biologischen Quellen verwendet oder mittels biologischer Verfahren gewonnen werden. Dies kann in Summe die Ökobilanz des gesamten Verfahrens äußerst positiv beeinflussen. Ohne durch die Theorie gebunden zu sein wird davon ausgegangen, dass insbesondere die Verwendung eines Lösemittels aus der Gruppe der kleinen bis mittleren, O-heterozyklischen Aliphaten, in Verbindung mit dem Einsatz von Kohlendioxid als fraktionsbestimmendes Agens, zu besonders geeigneten Änderungen der Lösemitteleigenschaften führt, welche in Verbindung mit den aromatischen Grundstrukturen der Lignine zu einer besonders effizienten Trennung beitragen. Es lassen sich in diesen Lösungsmitteln bei moderaten Temperaturen eine Vielzahl unterschiedlicher Lignine zu hohen Gewichtsanteilen lösen, welches zu einer effizienten Prozessführung beitragen kann. Als Funktion des aufgepressten Kohlendioxiddrucks können in dieser Lösemittelgruppe zudem die Lösemitteleigenschaften besonders präzise geändert werden, so dass die Lignine als Funktion ihres Molekulargewichts und/oder als Funktion ihres chemischen Aufbaus besonders homogen aus der Lösung ausgefällt werden können. In diesem Zusammenhang ist auch überraschend, dass die Änderungen der Lösemitteleigenschaften besonders sensitiv auf die Verknüpfung der einzelnen Lignin-Untereinheiten reagiert, so dass insbesondere auch eine sehr funktionale Auftrennung als Funktion der Verknüpfung im erfindungsgemäßen Verfahren erhalten wird.

Das erfindungsgemäße Verfahren ist ein Verfahren zur fraktionierenden Ausfällung von Ligninen aus einer nicht-wässrigen Lösung. Das erfindungsgemäße Verfahren liefert also nicht nur die reine Möglichkeit, das Lignin aus einer Lösung ausgefällt wird. Das erfindungsgemä-ße Verfahren ermöglicht, dass durch die Änderung des Kohlendioxid-Drucks spezifische Ligninen-Fraktionen nacheinander aus der Lösung ausgefällt werden. Insofern ist es nicht erfindungsgemäß, dass in einem einstufigen Verfahren, das gesamte in Lösung gehaltene Lignin durch Erhöhung des Kohlendioxid-Drucks ausgefällt wird. Insbesondere kann mit der fraktionierenden Ausfällung verbunden sein, dass beispielsweise höhermolekulare Lignin-Fraktionen bei geringeren Kohlendioxid-Drücken und niedermolekulare Lignin-Fraktionen bei höheren Kohlendioxid-Drücken ausgefällt werden. Die Lignine werden dabei aus einem nicht wässrigen Lösungsmittels ausgefällt. Ein nicht wässriges Lösungsmittel liegt insbesondere dann vor, wenn der Wasseranteil des Lösungsmittels kleiner oder gleich 50 Gewichtsprozent beträgt. Bevorzugt kann der Wasseranteil des Lösungsmittels kleiner oder gleich 25, des Weiteren bevorzugt kleiner oder gleich 5 Gewichtsprozent betragen. Insbesondere kann das nicht wässrige Lösungsmittel vorteilhafterweise wasserfrei sein. Wasserfrei bedeutet in diesem Zusammenhang, dass der Wasseranteil in der Lösung zu einem Großteil von den Ligninen und nicht vom Lösungsmittel herrührt. Insbesondere kann der Wasseranteil nach Auflösen des Lignins im Lösemittel kleiner oder gleich 0,1 Gewichtsprozent betragen.

Lignine bilden eine Gruppe phenolischer Makromoleküle, welche sich als Funktion des biologischen Ursprungs aus unterschiedlichen Monomerbausteinen zusammensetzen. Die Lignine gehören zur Klasse der biologischen Polymere und kommen üblicherweise in Bäumen und Gräsern vor. In diesen bewirken die Lignine die Verholzung von Zellen. Ca. 20 bis 30 Prozent der Trockenmasse verholzter Pflanzen können auf Lignine zurückgeführt werden, welches somit neben Zellulose und Chitin zu den häufigsten organischen Verbindungen der Erde zählen.

Allen Ligninen gemein ist die Zugehörigkeit zur Klasse der Phenylpropanoide, wobei üblicherweise Molekulargewichte von etwa 5.000 - 10.000 Da für einzelne Lignin-Polymere erreicht werden. Weitere Substituenten des Benzolrings können kurze Aliphaten, beispielsweise Propyl-, Hydroxy- und/oder Methoxygruppen, sowie Alkoxy- oder Aryloxy-Gruppen sein. Lignin-Polymere bilden dreidimensionale amorphe Netzwerke, wobei die einzelnen Lignin-Ketten in vielfältiger Form miteinander verknüpft sein können. Neben aromatischen Bindungen enthalten Lignine weitere Kohlenstoff-Kohlenstoff-Einfach- oder Doppelbindungen, sowie phenolische Gruppen. Die genaue Zusammensetzung der Lignine ist eine Funktion des Pflanzenursprungs, wobei als konkrete Basisbausteine p-Cumaryl-, Coniferyl- und Sinapylalkohol in variierenden Anteilen vorkommen.

Das Verfahren umfasst einen ersten Verfahrensschritt a), in welchem Lignine in einem Lösungsmittel ausgesucht aus der Gruppe bestehend aus substituierten oder nicht substituierten aliphatischen, zyklischen Ethern oder Lactonen oder einer Mischung dieser Lösungsmittel gelöst werden. Im ersten Verfahrensschritt werden die Lignine in das Lösungsmittel gegeben und in diesem gelöst. Dies kann beispielsweise durch Rühren, Ultraschallbehandlung oder Erwärmen des Lösungsmittels beschleunigt werden. Die Lösung der Lignine im Lösungsmittel erfolgt nicht auf einer Basis der Aufspaltung der Ketten in die einzelnen Monomere, sondern durch das Separieren der einzelnen Polymerketten voneinander. Das Lösen der Lignine kann beispielsweise bei einer Temperatur von größer oder gleich 10 °C und kleiner oder gleich 60 °C erfolgen. Der Anteil des zu lösenden Lignins in Abhängigkeit des Lösungsmittels kann variabel sein, wobei sich beispielsweise Lignin-Anteile von größer oder gleich 5 Gewichtsprozent und kleiner oder gleich 30 Gewichtsprozent in dem Lösungsmittel lösen lassen. Zur geeigneten Separierung der einzelnen Lignin-Polymere haben sich insbesondere die oben angegebenen, sauerstoffhaltigen Heterozyklen als besonders geeignet herausgestellt. Ohne durch die Theorie gebunden zu sein, scheinen die zyklischen, nicht aromatischen Ringstrukturen der Lösungsmittel geeignet zu sein, um die Wechselwirkungen zwischen den einzelnen Lignin-Ketten zu reduzieren und zu einer besonders schnellen und vollständigen Dissoziation und Lösung der Lignine beizutragen. Unter zyklischen Ethern werden dabei geschlossene aliphatische Monozyklen verstanden, welche mindestens ein Sauerstoffatom in der Ringstruktur aufweisen. Bei den Ethern kann es sich aber auch um Polyether handeln, welche beispielsweise mehrere Sauerstoffatome in der Ringstruktur tragen können. Übliche Größen der zyklischen Verbindungen können beispielsweise 4 - 15 Atome in der Ringstruktur aufweisen. Für die Lactone als Lösungsmittel gilt das für die Ether gesagte, wobei die Lactone natürlich noch mindestens ein zusätzlichen Sauerstoff aufweisen, welcher benachbart zum RingSauerstoff vorliegt (= O) und nicht in die Ringstruktur eingebunden ist. In den Fällen, in denen die Lösungsmittel substituiert vorliegen, können die angegebenen Grundgerüste noch weitere Substituenten wie beispielsweise Alkylketten oder weitere funktionale Gruppen, wie beispielsweise Hydroxylgruppen, Alkoxy-Gruppen, stickstoffhaltige funktionale Gruppen wie beispielsweise Aminogruppen usw. tragen. Das Molekulargewicht der weiteren Substituenten übersteigt dabei nicht das Molekulargewicht der Ringstruktur.

Das Verfahren umfasst einen zweiten Verfahrensschritt b), in welchem das Lignin durch Aufpressen unterschiedlicher Kohlendioxiddrücke zumindest als Funktion des Molekulargewichts und/oder als Funktion der Lignin-Zusammensetzung selektiv aus der Lösung ausgefällt wird. Nach dem Lösen des Lignins im organischen Lösungsmittel kann der Druck über das Aufpressen von Kohlendioxid graduell gesteigert werden. Das Kohlendioxid wird im Lösungsmittel gelöst und ändert dadurch die Lösemitteleigenschaften des Lösungsmittels. Durch den Einsatz der oben angegebenen Gruppe an Lösungsmitteln lassen sich insbesondere mittels Kohlendioxid die Lösungsmitteleigenschaften des Lösungsmittels in weiten Bereichen sehr gesteuert variieren. Ohne durch die Theorie gebunden zu sein scheinen insbesondere die erfindungsgemäß einsetzbaren Sauerstoff-Heterozyklen in Zusammenhang mit dem Einsatz von Kohlendioxid dazu geeignet, dass unterschiedliche Lignin-Fraktionen besonders selektiv aus dem Lösungsmittel entfernt werden können. Die ausgefallene Lignin-Fraktion kann mechanisch von der weiteren Lösung getrennt werden. Die unterschiedlichen Lignin-Fraktionen lassen sich des Weiteren vorteilhaft in dieser Lösemittelgruppe durch einen relativ begrenzten Bereich an Kohlendioxiddrücken ausfällen. So können innerhalb des erfindungsgemäßen Verfahrens beispielsweise Drücke von größer oder gleich 5 bar und kleiner oder gleich 100 bar zur Auftrennung der einzelnen Lignin-Fraktionen eingesetzt werden. Die Lösemitteleigenschaften in Verbindung mit dem Aufpressen des Kohlendioxids trennen die Lignin-Polymere dabei nicht nur als Funktion des Molekulargewichts. Es ist auch möglich, dass das Lignin auf Basis der Monomer-Zusammensetzung oder aber auch auf Basis der einzelnen Monomere Anteile aufgetrennt wird. Es ergibt sich ein sehr flexibles System, welches, beispielsweise auf Basis der angelegten Drucksprünge, auch zur Auftrennung von Polymeren mit gleichem Molekulargewicht aber unterschiedlicher Monomerzusammensetzung genutzt werden kann.

In einer bevorzugten Ausführungsform des Verfahrens kann das Lösungsmittel der folgenden Formel I oder II 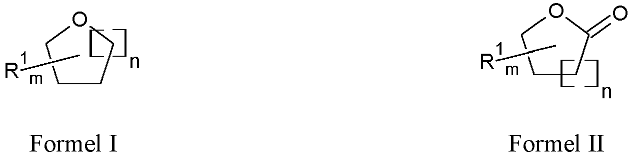 oder Mischungen dieser Verbindungen entsprechen, wobei die R1m an jeder bindungsfähigen Stelle des zyklischen Gerüstes vorliegen und jeweils unabhängig voneinander ausgesucht sind aus der Gruppe bestehend aus H oder C1-C4-Alkyl, mit m = 3+n für die Formel I und m = 2+n für die Formel II, und n = 1, 2, 3, 4, 5. Insbesondere die Gruppe der oben angegebenen Ether und Lactone hat sich zur Auftrennung einer großen Anzahl unterschiedlicher Lignine als besonders geeignet herausgestellt. Durch das Aufpressen unterschiedlicher Kohlendioxiddrücke können die Eigenschaften des Lösemittels besonders stark variiert werden, so dass schon mit kleinen Druckbereichen ein breiter Bereich von Molekulargewichten und/oder Polymerzusammensetzungen aufgetrennt werden kann. In diesen Lösungsmitteln lösen sich die Lignine sehr schnell und bei moderaten Temperaturen, so dass auf ein aufwändiges Temperieren der Lösung verzichtet werden kann. Zusätzlich vorteilhaft ist, dass die Lösemittel aus natürlichen Edukten gewonnen werden können. Dies kann insgesamt die Umweltverträglichkeit des Verfahrens erhöhen. Zudem können diese Gruppen an Lösemitteln einfach und vollständig aus dem ausgefällten Lignin entfernt werden, so dass ohne großen energetischen Aufwand, sehr reine Lignin-Fraktionen erhältlich sind.

Innerhalb einer weiter bevorzugten Ausgestaltung des Verfahrens kann das Lösungsmittel der folgenden Formel III 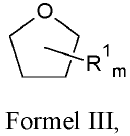 oder Mischungen dieser Verbindungen entsprechen, wobei die R¹ₘ an jeder bindungsfähigen Stelle des zyklischen Gerüstes vorliegen und jeweils unabhängig voneinander ausgesucht sind aus der Gruppe bestehend aus H oder C1-C4 Alkyl, wobei m = 4. Insbesondere die substituierten oder nicht substituierten Tetrahydrofurane können geeignet sein, um Lignine unterschiedlicher Zusammensetzung oder unterschiedlichen Molekulargewichts voneinander aufzutrennen. Die einzelnen Lignine können dabei mit einem sehr kleinen Polydispersitätsindex erhalten werden, welches für eine sehr spezifische Fraktionierung gerade der Lignine durch diese Lösemittel spricht. Auch diese Gruppe an Lösungsmitteln kann aus biologischen Quellen gewonnen werden, welches insbesondere die Umweltbilanz des vorgeschlagenen Verfahrens verbessern kann. Durch die Angabe des Index m wird an dieser Stelle ausgedrückt, dass das Tetrahydrofuran beispielsweise ein, zwei bis hin zu vier Alkylketten tragen kann. Durch die Wahl des Substitutionsmusters kann das Lösemittel weiterhin auf die vorliegende Trennaufgabe, und hier insbesondere die Quelle des eingesetzten Lignins, adaptiert werden.

Innerhalb eines weiter bevorzugten Aspektes des Verfahrens kann das Lösungsmittel 2-Methyltetrahydrofuran sein. Insbesondere der Einsatz von 2-Methyltetrahydrofuran (2-MTHF) kann zu einer schnellen und sehr genauen Fraktionierung von Ligninen beitragen. Das Lösungsmittel ist sehr effizient und so werden unter nur geringen Kohlendioxiddrücken sehr selektive Molekulargewichtsbereiche von Lignin-Fraktionen erhalten. Die Polydispersität der einzelnen Fraktionen ist dabei verglichen mit dem Einsatz anderer Lösungsmittel besser.

In einer weiter bevorzugten Ausführungsform des Verfahrens können neben Lignin weitere Biopolymere aus der Gruppe bestehend aus Lipiden, Sacchariden und Proteinen oder Mischungen mindestens zweier Komponenten aus dieser Gruppe aufgetrennt werden. Neben der Aufarbeitung von Ligninen kann das vorgestellte Verfahren auch zur Aufarbeitung weiterer Biopolymere, beispielsweise aus oben genannter Gruppe, verwendet werden. Die chemische Zusammensetzung dieser Polymere ist geeignet, um in der angegebenen Gruppe an bevorzugten Lösemitteln, unter Einsatz von Kohlendioxid, selektiv als Funktion des Molekulargewichts und/oder als Funktion der Zusammensetzung der einzelnen Polymere, in homogenere Fraktionen getrennt zu werden.

Innerhalb eines bevorzugten Aspektes des Verfahrens kann das Lignin ein gewichtsgemitteltes Molekulargewicht M_{w}, bestimmt mittels Größenausschlusschromatografie SEC, von größer oder gleich 100 g/mol und kleiner oder gleich 10.000 g/mol aufweisen. Insbesondere im Bereich der Lignin-Fraktionen mit einem geringen Molekulargewicht kann das vorgestellte Verfahren dazu beitragen, dass die einzelnen Polymere in einer sehr engen Größenverteilung aus dem Lösemittel ausgefällt werden. Als Funktion des angelegten Kohlendioxid-Drucks lassen sich dabei Fraktionen erhalten, welche sich in ihrem Molekulargewicht nur sehr gering unterscheiden und/oder Fraktionen, welche eine annähernd gleiche Zusammensetzung der Monomere in der Polymerkette aufweisen. Weiter bevorzugt kann das Molekulargewicht auch kleiner oder gleich 6.000 g/mol betragen. Insbesondere können diese Bereiche aus Ligninen erhalten werden, welche aus einer Organosolv- oder OrganoCat-Vorbehandlung stammen.

Innerhalb einer weiter bevorzugten Ausgestaltung des Verfahrens kann das Lignin einen Anteil an β-*O*-4 Verknüpfungen von größer oder gleich 10 mol-% und kleiner oder gleich 60 mol-% bezogen auf die Anzahl an Monomereinheiten innerhalb des Moleküls aufweisen. Das erfindungsgemäße Verfahren kann insbesondere dazu genutzt werden, unterschiedliche Lignin-Fraktionen zu erhalten, welche sich durch die Art der Verknüpfungen der einzelnen Monomere unterscheiden. Hierzu können sich insbesondere Lignin-Polymere eignen, welche β-O-4 Verknüpfungen im oben angegebenen Bereich zeigen. Diese Klasse an Ligninen kann sich beispielsweise durch die Art der Lignin-Aufarbeitung ergeben und kann in Kombination mit dem erfindungsgemäßen Verfahren zu besonders einheitlichen Fraktionen verarbeitet werden.

Innerhalb eines weiter bevorzugten Aspektes des Verfahrens kann das Lignin aus einer chemischen Aufarbeitung einer Lignozellulose stammen, wobei die Aufarbeitung der Lignozellulose zur Abtrennung des Lignins mindestens das Kontaktieren der Lignozellulose mit einem organischen Lösemittel umfasst. Die Zusammensetzung und die physiko-chemische Form des Lignins werden durch zwei Faktoren maßgeblich beeinflusst. Wie schon weiter oben angegeben, variiert die Zusammensetzung des Lignins stark als Funktion des pflanzlichen Ursprung. Neben der Lignin-Quelle als solche, können sich aber auch durch die chemische Aufarbeitung des ursprünglichen Pflanzenmaterials deutliche Unterschiede im Erscheinungsbild der aufzutrennenden Lignin-Fraktionen ergeben. Technisch seit langem etabliert ist der Kraft-Prozess, welcher zur Herstellung von Zellulose genutzt wird. Im Kraft-Prozess fällt Lignin als Nebenprodukt des eingesetzten Lignin/Zellulose-Gemisches an. Die eingesetzte Lignozellulose wird in alkalischer wässriger Lösung unter Zusatz von Natriumsulfid in Lignin und Zellulose aufgetrennt, wobei letztere beispielsweise für die Papierherstellung genutzt wird. Durch die harschen Prozessbedingungen und den Schwefeleinsatz fällt das Lignin nur verunreinigt an. Zudem ergibt sich durch die Prozessbedingungen, insbesondere die hohen Temperaturen und die Alkalität des Lösungsmittels, ein Lignin nur sehr geringer Qualität, welches in den meisten Fällen nur zur thermischen Verwertung genutzt werden kann. Der größte Fokus dieses Verfahrens liegt in der Bereitstellung einer hochwertigen Zellulose. Zum Erhalt qualitativ höherwertiger Lignin-Fraktionen haben sich hingegen Aufbereitungsverfahren bewährt, welche auf alkalische Schritte und hohe Temperaturen gänzlich verzichten können. In diesen Verfahren wird ebenfalls Lignozellulose als Edukt eingesetzt. Diese wird allerdings unter moderaten Prozessbedingungen in einem organischen Lösemittel (Organo) umgesetzt und so von den weiteren Bestandteilen der Lignozellulose getrennt. Dieses Lignin weist keine Schwefelbestandteile auf und kann sich zudem durch einen höheren Anteil an β-*O*-4 Verknüpfungen auszeichnen. Insbesondere durch den höheren Anteil dieser Verknüpfungen und durch die schonendere Behandlung des Lignins, kann dieses Material besonders gut durch das erfindungsgemäße Verfahren in weitere Fraktionen zerlegt werden. Die aus dieser Aufarbeitung erhältlichen Fraktionen sind deutlich homogener, zeichnen sich durch eine geringe Polydispersität aus und können deutlich gleichmäßigere Eigenschaften aufweisen.

Des Weiteren erfindungsgemäß ist die Verwendung des erfindungsgemäßen Verfahrens zur Auftrennung von Lignin-Fraktionen gewonnen aus einem OrganoCat- oder Organosolv-Verfahren. Das erfindungsgemäße Verfahren kann insbesondere in dem Kontext eines selektiven, umweltfreundlichen und kostengünstigen Aufarbeitungsverfahrens für Lignin eingesetzt werden. Lignin wird dabei vorteilhafterweise durch einen spezifischen Vorbehandlungsprozess gewonnen, bei denen Lignozellulose in ihre drei Hauptbestandteile, Hemizellulose, Zellulose und Lignin, aufgetrennt wird. Für die Lignin-Qualität vorteilhafte Vorbehandlungsmethoden erfolgen unter Einsatz organischer Lösemittel (Organosolv), welche die harschen, wasserbasierten und säurekatalysierten (Kraft)Prozesse ablösen. Durch die verbesserten Reaktionsbedingungen werden selektivere Depolymerisationen der Polysaccharidfraktion(en) ausgelöst. Durch den organischen Lösemitteleinsatz werden ebenfalls die Lignozellulose-Bestandteile physikalisch voneinander getrennt, und so die verschiedenen Rohstoffe gewonnen. Eine OrganoCat-Vorbehandlung zielt insbesondere darauf ab, dass durch den Einsatz biogener Ressourcen und unter relativ milden Verarbeitungsbedingungen der Abbau des Lignins während der Abtrennung reduziert wird. Die OrganoCat-Vorbehandlung verwendet ebenfalls ein organisches Lösungsmittel und zusätzlich eine organische Carbonsäure als Katalysator (beispielsweise Oxalsäure oder 2,5-Furandicarbonsäure, FDCA). Als Lösungsmittel kann ein biphasisches Medium aus Wasser und 2-Methyltetrahydrofuran (2-MTHF) eingesetzt werden, wobei das organische Lösungsmittel aus biogenen Ressourcen gewonnen werden kann. Beim OrganoCat-Verfahren werden relativ milde Bedingungen angewendet (z. B. 140-160 °C, 1-3 h), so dass die Säure selektiv die Hemizellulosen depolymerisiert, um Xylose und andere Zucker zu gewinnen, während Zellulose und Lignin als Makromoleküle erhalten werden. Die Zellulose bleibt in der wässrigen Phase suspendiert, und das Lignin wird mittels der 2-MTHF-Phase extrahiert. Anschließend kann das Lignin aus der 2-MTHF-Phase zur weiteren Verwertung zurückgewonnen werden. Neben der Destillation kann sich gerade das erfindungsgemäße Verfahren zur Weiterverarbeitung anbieten, da die Lignine prozessbedingt schon im "richtigen" Lösungsmittel gelöst vorliegen und rein durch den Einsatz von Kohlendioxid aufgetrennt werden können. Zudem unterschiedet sich die Lignin-Struktur deutlich von der Struktur aus anderen, beispielsweise Kraft-, Vorbehandlungen, welches zu einer verbesserten Auftrennung durch das erfindungsgemäße Verfahren führt. Insgesamt ergibt sich neben den Vorteilen in der Prozessführung auch eine verbesserte Qualität der erhältlichen, aufgetrennten Lignine.

Weitere Vorteile und vorteilhafte Ausgestaltungen der erfindungsgemäßen Gegenstände werden durch die Beispiele und Zeichnungen veranschaulicht und in der nachfolgenden Beschreibung erläutert.

### Beispiele

### Vorbehandlung Lignozellulose - Lignin und Zellulose

Zur fraktionierenden Auftrennung von Lignin wird Buchen-Lignozellulose mittels eines OrganoCat-Verfahrens in Lignin und Zellulose aufgetrennt. Das Buchenholz wurde dazu auf ca. 1 mm geschnitten und getrocknet. Zu den getrockneten Schnipseln wird 0,1 M Oxalsäure und 2-MTHF gegeben. Die Mischung wird für 3 h auf 140°C erhitzt. Die Mischung wird auf Raumtemperatur abgekühlt und die beiden flüssigen Phasen über einen Dekanter separiert. In der wässrigen Phase sammelt sich die Zellulose. Die Lignin-enthaltende organische Phase wird zur Entfernung der Oxalsäure mittels CaCl₂-Lösung extrahiert.

### Fraktionierende Ausfällung unterschiedlicher Lignine

Das OrganoCat-Lignin wird in einer Konzentration von 10 Gew.-% in 2-MTHF gelöst und bei Raumtemperatur in einen Hochdruckreaktor gegeben. Die Lösung wird mit unterschiedlichen Kohlendioxid-Drücken beaufschlagt und eine Lignin-Ausfällung in unterschiedlichen Fraktionen induziert. Ein Gleichgewicht in der jeweiligen Druckstufe stellt sich nach ca. 15 Minuten ein. Das ausgefallene Präzipitat wird gesammelt, getrocknet und auf die chemische Zusammensetzung hin untersucht.

Das Ausfallen von Lignin aus der organischen 2-MTHF-Lösung kann ab einem Druck von ca. 10 bar beobachtet werden. Innerhalb eines Druckbereichs bis zu 50 bar werden insgesamt 70 Gew.-% des eingesetzten Lignins aus der Lösung ausgefällt.

Die Figur zeigt 1 den Gewichtsanteil des ausgefallenen Lignins als Funktion des angelegten Kohlendioxidrucks. In der Figur ist sowohl der ausgefallene Lignin-Gewichtsanteil (Balken) pro Stufe, sowie die integrale Menge (gepunktete Linie) ausgefallenen Lignins angegeben.

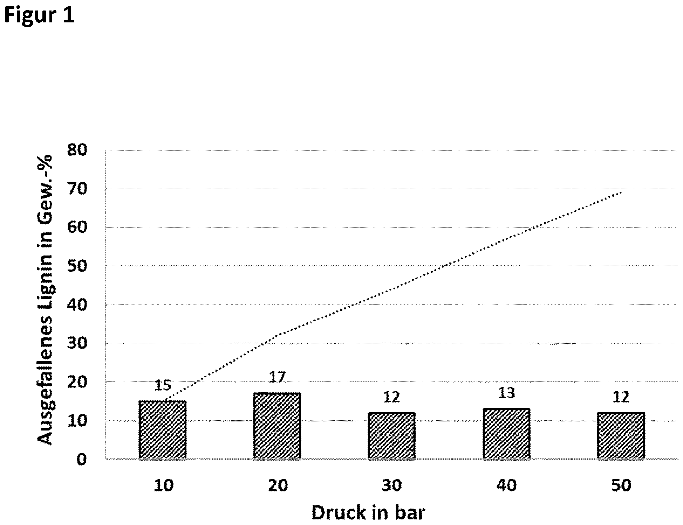

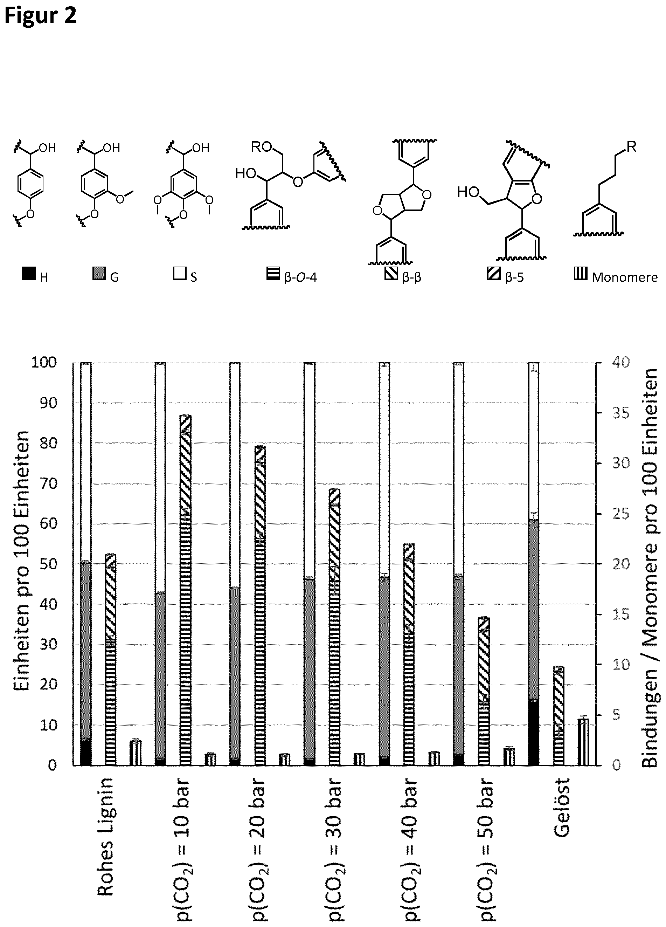

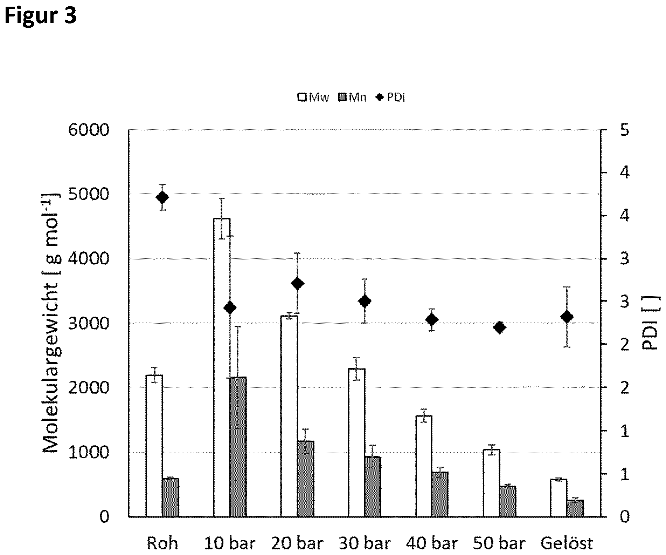

Die Figur 2 zeigt die Anteile der unterschiedlichen Lignin-Untereinheiten als Funktion der aufgetrennten Fraktionen, d.h. p-hydxoxy-Phenyl- (H), Guaiacyl- (G) und Syringyl- (S)-Einheiten (linke Achse). Zusätzlich ist der Anteil an Einheiten pro 100 Monomereinheiten des Lignins angegeben (rechte Achse). Es ist zu erkennen, dass das in Lösung verbliebene Lignins überwiegend aus H-Einheiten besteht (bis zu 16%), wohingegen in den ausgefallenen Ligninen im Druckbereich von 0-50 bar so gut wie keine H-Einheiten anfallen. Aus den Ergebnissen kann zudem geschlossen werden, dass die niedermolekularen Bestandteile, welche gar nicht oder bei höheren Drücken ausfallen, höhere H-Anteile aufweisen. Aus der Figur ist zudem zu erkennen, dass die S- und G-Einheiten einen gleichlaufenden Anteil (ca. 40-55%) in den jeweiligen Druckstufen aufweisen. Letzteres ist ein Anzeichen dafür, dass die Anteile dieser Monomere statistisch in sämtlichen Lignin-Fraktionen mit höherem Molekulargewicht verteilt sind.

Die Figur 2 zeigt sowohl die Verteilung relevanter Verknüpfungen (β-β, β-*O*-4, β-5) als auch das Vorkommen monomerer, dimerer- und oligomerer Strukturen als Funktion des angelegten Kohlendioxid-Drucks. Lignin-Fraktionen mit einem höheren β-*O*-4-Anteil werden bei relativ geringen Kohlendioxid-Drücken im Bereich von 10-20 bar ausgefällt. In höheren Druckbereichen ist der β-*O*-4-Anteil etwas geringer. Somit wird gezeigt, dass über das hier vorgestellte Verfahren eine fraktionierende Trennung von Ligninen mit unterschiedlichen und höheren β-O-4-Anteilen selektiv bereitgestellt werden kann. Die bei 10 bar ausfallende Fraktion zeigt im Vergleich mit dem Eduktmaterial einen ca. doppelt so hohen β-*O*-4-Anteil. Das Verhältnis der anderen Verknüpfungen, d.h. β-β und β-5, ist unabhängig vom Kohlendioxid-Druck und über die unterschiedlichen Fraktionen annähernd konstant. Monomere und kleine Oligomere werden auch mit ansteigendem Druck nur wenig abgeschieden und sammeln sich in der finalen Lignin-Fraktion, welche in der Lösung verbleibt. Der Anteil an β-β und β-*O*-4 Verknüpfungen in der noch gelösten Fraktion legt nahe, dass es sich um relativ kleine Oligomere mit hohem Anteil dieser Verknüpfungen handelt.

Eine Analyse der Hydroxylfunktionen der unterschiedlichen Lignin-Fraktionen belegt eine konstante Monomerzusammensetzung und eine abnehmende Anzahl aliphatischer Hydroxylgruppen, welche mit steigendem Druck ausfallen. Im noch in Lösung verbleibenden Lignin lässt sich eine höhere Anzahl an Carbonsäuregruppen nachweisen, welches eventuell durch die im Aufarbeitungsprozess eingesetzte Oxalsäure herrühren kann.

Zur weiteren Charakterisierung der Lignin-Fraktionen wurden die gewichtsgemittelten Molekulargewichte und der Polydispersitätindex (PDI) mittels Größenausschlusschromatografie (SEC) bestimmt. Mit zunehmendem Kohlendioxid-Druck sinkt das Molekulargewicht, welches auf ein Ausfällen des Lignins als Funktion des Molekulargewichts hindeutet. Der erhältliche PDI der einzelnen Fraktionen ist kleiner als der PDI der gesamt eingesetzten Fraktion. Die bei 10 bar ausgefallene Fraktion weist einen hohen Anteil an β-*O*-4 Verknüpfungen und S- und G-Einheiten mit einem gewichtsgemittelten Molekulargewicht von ca. 4600 g/mol auf. Die 50 bar Fraktion weist einen tieferen Gehalt an β-*O*-4-Verknüpfungen mit einem Molekulargewicht von ca. 1040 g/mol auf. Die bei 50 bar Druck in Lösung verbliebende Fraktion weist ein gewichtsgemitteltes Molekulargewicht von ca. 580 g/mol auf, welches ca. 4-mal kleiner ist als das gewichtsgemittelte Molekulargewicht des eingesetzten Lignins. Letztere Fraktion besteht wahrscheinlich aus Lignin-Mono- und -Dimeren.

Durch die Kombination eines OrganoCat-Verfahrens mit der erfindungsgemäßen Auftrennung konnte gezeigt werden, dass es möglich ist, mittels biogener Lösungsmittel eine effiziente Trennung von Ligninen durch Einsatz von Kohlendioxid durchzuführen. Der Druck löst eine molekulargewichtsabhängige Ausfällung des Lignins aus, wobei variierende Verknüpfungsanteile in den unterschiedlichen Fraktionen erhalten werden können. Das Lösungsmittel lässt sich wiederverwenden und auf diese Art und Weise kann ein kostengünstiger und umweltverträglicher Weg zum Erhalt spezifischer Lignine beschritten werden.

## Patentansprüche

1. Verfahren zur fraktionierenden Ausfällung aus einer chemischen Aufarbeitung einer Lignozellulose stammender Lignine aus einer nicht-wässrigen Lösung, wobei die Aufarbeitung der Lignozellulose zur Abtrennung des Lignins mindestens das Kontaktieren der Lignozellulose mit einem organischen Lösemittel umfasst, **dadurch gekennzeichnet, dass** in einem ersten Verfahrensschritt
a) Lignin in einem Lösungsmittel ausgesucht aus der Gruppe bestehend aus substituierten oder nicht substituierten aliphatischen, zyklischen Ethern oder Lactonen oder einer Mischung dieser Lösungsmittel gelöst wird und in einem zweiten Verfahrensschritt
b) das Lignin durch Aufpressen unterschiedlicher Kohlendioxiddrücke zumindest als Funktion des Molekulargewichts und/oder als Funktion der Lignin-Zusammensetzung selektiv aus der Lösung ausgefällt werden.

2. Verfahren nach Anspruch 1, wobei das Lösungsmittel der folgenden Formel I oder II 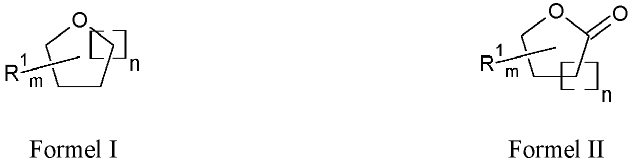 oder Mischungen dieser Verbindungen entspricht, wobei die R¹ₘ an jeder bindungsfähigen Stelle des zyklischen Gerüstes vorliegen und jeweils unabhängig voneinander ausgesucht sind aus der Gruppe bestehend aus H oder C1-C4-Alkyl, mit m = 3+n für die Formel I und m = 2+n für die Formel II, und n = 1, 2, 3, 4, 5.

3. Verfahren nach einem der vorhergehenden Ansprüche, wobei das Lösungsmittel der folgenden Formel III 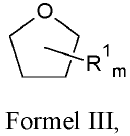 oder Mischungen dieser Verbindungen entspricht, wobei die R¹ₘ an jeder bindungsfähigen Stelle des zyklischen Gerüstes vorliegen und jeweils unabhängig voneinander ausgesucht sind aus der Gruppe bestehend aus H oder C1-C4 Alkyl, wobei m = 4.

4. Verfahren nach einem der Ansprüche 2 oder 3, wobei m = 1 ist.

5. Verfahren nach einem der vorhergehenden Ansprüche, wobei das Lösungsmittel 2-Methyltetrahydrofuran ist.

6. Verfahren nach einem der vorhergehenden Ansprüche, wobei das Lignin ein gewichtsgemitteltes Molekulargewicht M_{w}, bestimmt mittels Größenausschlusschromatografie SEC, von größer oder gleich 100 g/mol und kleiner oder gleich 10.000 g/mol aufweist.

7. Verfahren nach einem der vorhergehenden Ansprüche, wobei das Lignin einen Anteil an β-0-4 Verknüpfungen von größer oder gleich 10 mol-% und kleiner oder gleich 60 mol-% bezogen auf die Anzahl an Monomereinheiten innerhalb des Moleküls aufweist.

8. Verfahren nach einem der vorhergehenden Ansprüche, wobei das Lignin mit einem Gewichtsanteil von größer oder gleich 3 Gew.-% und kleiner oder gleich 25 Gew.-% in dem Lösungsmittel gelöst wird.

9. Verwendung eines Verfahrens nach einem der vorhergehenden Ansprüche zur Auftrennung von Lignin-Fraktionen gewonnen aus einem OrganoCat- oder Organosolv-Verfahren.

## Claims

1. Process for the fractional precipitation of lignins originating from a chemical work-up of a lignocellulose from a non-aqueous solution, wherein the work-up of the lignocellulose for separation of the lignin comprises at least contacting the lignocellulose with an organic solvent, **characterized in that**, in a first process step
a) lignin is dissolved in a solvent selected from the group consisting of substituted or unsubstituted aliphatic, cyclic ethers or lactones or a mixture of these solvents and, in a second process step
b) the lignin is selectively precipitated from the solution at least as a function of the molecular weight and/or as a function of the lignin composition by application of different carbon dioxide pressures.

2. . The process according to claim 1, wherein the solvent is according to the following formula I or II 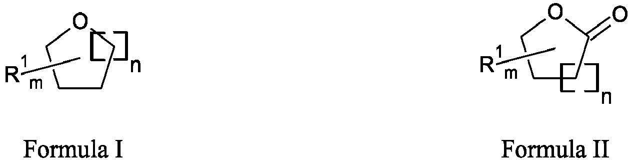 or mixtures of these compounds, wherein the R¹ₘ are present at each bindable site of the cyclic skeleton and are each independently selected from the group consisting of H or C1-C4 alkyl, with m = 3+n for formula I and m = 2+n for formula II, and n = 1, 2, 3, 4, 5.

3. . The process according to any one of the preceding claims, wherein the solvent is of the following formula III: 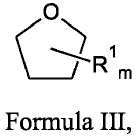 or mixtures of these compounds, wherein the R¹ₘ are present at each bindable site of the cyclic skeleton and are each independently selected from the group consisting of H or C1-C4 alkyl, wherein m = 4.

4. . The process according to any one of claims 2 or 3, wherein m = 1.

5. . The process according to any one of the preceding claims, wherein the solvent is 2-methyltetrahydrofuran.

6. . The process according to any one of the preceding claims, wherein the lignin has a weight average molecular weight M_{w}, determined by size exclusion chromatography SEC, of greater than or equal to 100 g/mol and less than or equal to 10,000 g/mol.

7. . The process according to any one of the preceding claims, wherein the lignin has a β-O-4 linkage content of greater than or equal to 10 mol% and less than or equal to 60 mol% based on the number of monomer units within the molecule.

8. . The process according to any one of the preceding claims, wherein the lignin is dissolved in the solvent at a weight fraction greater than or equal to 3% by weight and less than or equal to 25% by weight.

9. . Use of a process according to any one of the preceding claims for the separation of lignin fractions obtained from an OrganoCat or Organosolv process.

## Revendications

1. Procédé de précipitation par fractionnement d'une lignine provenant d'un traitement chimique d'une lignocellulose à partir d'une solution non aqueuse, dans lequel le traitement de la lignocellulose pour la séparation de la lignine comprend au moins la mise en contact de la lignocellulose avec un solvant organique, **caractérisé en ce que**, dans une première étape de procédé,
a) de la lignine est solubilisée dans un solvant sélectionné dans le groupe constitué d'éthers ou de lactones cycliques aliphatiques substitués ou non substitués, ou dans un mélange de ces solvants, et, dans une deuxième étape de procédé,
b) la lignine est précipitée sélectivement à partir de la solution par l'application de pressions de dioxyde de carbone différentes au moins en fonction du poids moléculaire et/ou en fonction de la composition en lignine.

2. Procédé selon la revendication 1, dans lequel le solvant correspond aux formules suivantes I et II 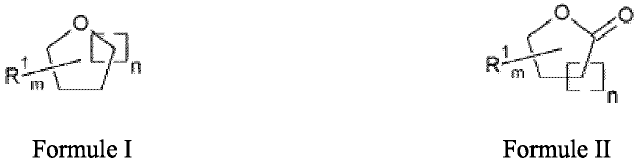 ou à des mélanges de ces composés, où les R¹ₘ sont présents à chaque point de liaison possible de l'échafaudage cyclique et sont respectivement choisis indépendamment les uns des autres dans le groupe constitué de l'atome H ou de groupements alkyles en C1-C4, avec m = 3 + n pour la formule I et m = 2 + n pour la formule II, et n = 1, 2, 3, 4, 5.

3. Procédé selon l'une des revendications précédentes, dans lequel le solvant correspond à la formule III 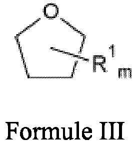 ou à des mélanges de ces composés, où les R¹ₘ sont présents à chaque point de liaison possible de l'échafaudage cyclique et sont respectivement choisis indépendamment les uns des autres dans le groupe constitué de l'atome H ou de groupements alkyles en C1-C4, où m = 4.

4. Procédé selon l'une des revendications 2 ou 3, où m est = 1.

5. Procédé selon l'une des revendications précédentes, dans lequel le solvant est du 2-méthyl tétrahydrofurane.

6. Procédé selon l'une des revendications précédentes, dans lequel la lignine présente un poids moléculaire moyen M_{w} déterminé au moyen de la chromatographie d'exclusion stérique SEC égal ou supérieur à 100 g/mole et inférieur ou égal à 10 000 g/mole.

7. Procédé selon l'une des revendications précédentes, dans lequel la lignine présente une proportion en liaisons β-O-4 égale ou supérieure à 10 % en moles et inférieure ou égale à 60 % en moles par rapport au nombre d'unités monomériques à l'intérieur de la molécule.

8. Procédé selon l'une des revendications précédentes, dans lequel la lignine est solubilisée dans le solvant dans une proportion en poids égale ou supérieure à 3 % en poids et inférieure ou égale à 25 % en poids.

9. Utilisation d'un procédé selon l'une des revendications précédentes pour la séparation de fractions de lignine provenant d'un procédé d'organocatalyse ou organosolv.
